# EUROPEAN PATENT SPECIFICATION

(11) **EP 3 506 412 B1**
(45) Date of publication and mention of the grant of the patent: **05.01.2022**
(21) Application number: 17846374.1
(22) Date of filing: 28.08.2017
(51) Int. Cl.: H01M 10/0569, H01G 11/32, H01G 11/60, H01M 4/36, H01M 4/587, H01M 4/133, H01M 10/052, H01M 4/02

(54) **NONAQUEOUS ELECTROLYTE ENERGY STORAGE DEVICE**
ENERGIESPEICHERVORRICHTUNG MIT WASSERFREIEM ELEKTROLYT
DISPOSITIF DE STOCKAGE D'ÉLECTRICITÉ À ÉLECTROLYTE NON AQUEUX

(30) Priority: 29.08.2016 JP 2016167196
(43) Date of publication of application: 03.07.2019
(73) Proprietor: GS Yuasa International Ltd., Kyoto-shi, Kyoto 601-8520 (JP)
(72) Inventor: YAMAMOTO, Hidemi, Kyoto-shi Kyoto 601-8520 (JP); KISHIMOTO, Akira, Kyoto-shi Kyoto 601-8520 (JP); NAKAGAWA, Hiroe, Kyoto-shi Kyoto 601-8520 (JP)
(74) Representative: Isarpatent
(86) International application number: PCT/JP2017/030658
(87) International publication number: WO 2018/043369

(56) References cited:
- WO-A1-2015/037451
- WO-A1-2016/098708
- WO-A1-2016/098708
- JP-A- 2006 004 878
- JP-A- 2012 099 474
- US-A1- 2014 106 237

## Description

### TECHNICAL FIELD

The present invention relates to a nonaqueous electrolyte energy storage device.

### BACKGROUND ART

Nonaqueous electrolyte secondary batteries typified by lithium ion secondary batteries have been widely used for electronic devices such as personal computers and communication terminals, automobiles and the like because of their high energy density. The nonaqueous electrolyte secondary battery generally has a pair of electrodes electrically isolated by a separator, and a nonaqueous electrolyte interposed between the electrodes, and is configured to perform charge-discharge by delivering ions between both the electrodes. In addition, capacitors such as lithium ion capacitors and electric double layer capacitors are widely used as nonaqueous electrolyte energy storage devices other than nonaqueous electrolyte secondary batteries.

For the nonaqueous electrolyte of such a nonaqueous electrolyte energy storage device, various additives and solvents are selected and used in order to improve performance such as enhancement of the capacity. For example, it is known that when a nonaqueous electrolyte contains fluorinated cyclic carbonate such as fluoroethylene carbonate (FEC), the charge-discharge cycle performance of a nonaqueous electrolyte energy storage device using the nonaqueous electrolyte is improved (see Patent Documents 1 and 2).

WO-A-2016098708 describes a non-aqueous electrolyte lithium ion secondary battery, having an anode comprising artificial graphite and hardly graphitizable carbon in the ratio 80:20 to 95:5 in an amount of, e.g. 90 mass %, in the negative active material. The non-aqueous electrolyte comprises a LiPF₆ in a concentration of 1 mol/l in a solvent, e.g. EC:DEC in a ratio 30:70 and can contain as an additive FEC.

US-A-2014106237 describes a Li-ion non-aqueous secondary battery using 10-15 wt.% FEC in the electrolyte solution in order to stabilize the SEI and improve the cycle-life characteristics of these devices.

### PRIOR ART DOCUMENTS

### PATENT DOCUMENTS

Patent Document 1: JP-A-2015-165482
Patent Document 2: JP-A-2011-243571

### SUMMARY OF THE INVENTION

### PROBLEMS TO BE SOLVED BY THE INVENTION

However, when a nonaqueous electrolyte containing fluorinated cyclic carbonate such as FEC as described above and a negative electrode having graphite are used in combination in a nonaqueous electrolyte energy storage device, there is a disadvantage that the internal resistance increases. In addition, in order to increase the energy density of the nonaqueous electrolyte energy storage device, it is particularly preferable that the nonaqueous electrolyte energy storage device has a high discharge capacity when charged at a relatively high end-of-charge voltage.

The present invention has been made on the basis of the above circumstances, and an object of the present invention to provide a nonaqueous electrolyte energy storage device which reduces internal resistance while a nonaqueous electrolyte containing fluorinated cyclic carbonate is used and which has a high discharge capacity when charged at a relatively high end-of-charge voltage.

### MEANS FOR SOLVING THE PROBLEMS

A nonaqueous electrolyte energy storage device according to one aspect of the present invention which has been made to solve the above-described problems is a nonaqueous electrolyte energy storage device including: a nonaqueous electrolyte containing a nonaqueous solvent containing fluorinated cyclic carbonate, and an electrolyte salt; and a negative electrode containing graphite and hardly graphitizable carbon, wherein a mass of the graphite is larger than the mass of the hardly graphitizable carbon, and the content of the electrolyte salt in the nonaqueous electrolyte is less than 2.0 mol/l, characterized in that a content of the fluorinated cyclic carbonate in the nonaqueous solvent is 5% by volume or more and less than 25% by volume, according to the independent claim 1.

### ADVANTAGES OF THE INVENTION

According to the present invention, it is possible to provide a nonaqueous electrolyte energy storage device which reduces internal resistance while a nonaqueous electrolyte containing fluorinated cyclic carbonate is used and which has a high discharge capacity when charged at a relatively high end-of-charge voltage.

### BRIEF DESCRIPTION OF THE DRAWINGS

Fig. 1 is an appearance perspective view showing a nonaqueous electrolyte energy storage device according to one embodiment of the present invention.
Fig. 2 is a schematic view showing an energy storage apparatus formed by assembling a plurality of nonaqueous electrolyte energy storage devices according to one embodiment of the present invention.
Fig. 3 is a graph showing a relationship between the ratio of hardly graphitizable carbon and the resistance ratio in an example of the present invention.
Fig. 4 is a graph showing a relationship between the ratio of hardly graphitizable carbon and the initial discharge capacity ratio in an example of the present invention.
Fig. 5 is a graph showing a relationship between the ratio of hardly graphitizable carbon and the post-cycle discharge capacity ratio in an example of the present invention.

### MODE FOR CARRYING OUT THE INVENTION

A nonaqueous electrolyte energy storage device according to one embodiment of the present invention which has been made to solve the above-described problems is a nonaqueous electrolyte energy storage device (hereinafter, referred to simply as an "energy storage device" including a nonaqueous electrolyte containing a nonaqueous solvent containing fluorinated cyclic carbonate, and an electrolyte salt; and a negative electrode containing graphite and hardly graphitizable carbon, wherein a mass of the graphite is larger than the mass of the hardly graphitizable carbon, and the content of the electrolyte salt in the nonaqueous electrolyte is less than 2.0 mol/l, characterized in that a content of the fluorinated cyclic carbonate in the nonaqueous solvent is 5% by volume or more and less than 25% by volume, according to the independent claim 1.

In the energy storage device, the negative electrode contains hardly graphitizable carbon together with graphite as described above, the content (mass) of graphite in the negative electrode is larger than the content (mass) of the hardly graphitizable carbon in the negative electrode, the nonaqueous electrolyte contains a nonaqueous solvent containing fluorinated cyclic carbonate, and an electrolyte salt, and the content of the electrolyte salt in the nonaqueous electrolyte is less than a predetermined content. Accordingly, in the energy storage device, internal resistance can be reduced, and a high discharge capacity can be obtained when the energy storage device is charged at a relatively high end-of-charge voltage. In addition, graphite gives a charge-discharge curve having a smaller gradient as compared to hardly graphitizable carbon, so that a low potential can be maintained until the end of discharge. Thus, when the content (mass) of graphite in the negative electrode is larger than the content (mass) of hardly graphitizable carbon in the negative electrode, a high closed circuit voltage can be maintained in a wide range of depth of discharge (DOD), so that a high energy density can be obtained. The "discharge" of the negative electrode means that ions such as lithium ions are electrochemically desorbed or detached from graphite and hardly graphitizable carbon, and the "charge" of the negative electrode means that ions such as lithium ions are electrochemically inserted into or adsorbed to graphite and hardly graphitizable carbon.

Here, the "graphite" refers to a carbon material in which the average grid spacing (d002) of the (002) surface as determined by a wide angle X-ray diffraction method is less than 0.340 nm. The average grid spacing (d002) of graphite is preferably 0.338 nm or less. In addition, the "hardly graphitizable carbon" refers to a carbon material having an average grid spacing (d002) of 0.340 nm or more. The average grid spacing (d002) of hardly graphitizable carbon is preferably 0.370 nm or more.

The mass ratio of the graphite to the hardly graphitizable carbon (graphite/hardly graphitizable carbon) is preferably 70/30 or more and 96/4 or less. When the mass ratio of graphite and hardly graphitizable carbon is within the above-mentioned range, the internal resistance of the energy storage device can be further reduced, and a higher discharge capacity can be obtained when the energy storage device is charged at a relatively high end-of-charge voltage.

Preferably, the negative electrode contains the graphite and the hardly graphitizable carbon as a negative active material, and the total content ratio of the graphite and the hardly graphitizable carbon is 90% by mass or more based on the amount of the negative active material. By increasing the total content ratio of graphite and hardly graphitizable carbon as a negative active material as described above, the effects of the energy storage device, i.e. reduction of internal resistance and enhancement of the capacity, can be further exhibited.

The content of fluorinated cyclic carbonate in the nonaqueous solvent is 5% by volume or more and 25% by volume or less. When the content of fluorinated cyclic carbonate is within the above-mentioned range, the effects of the energy storage device, i.e. reduction of internal resistance and enhancement of the capacity, can be further exhibited.

Preferably, the negative electrode contains graphite particles and hardly graphitizable carbon particles. When graphite particles and hardly graphitizable carbon particles are present separately, the effects of the energy storage device, i.e. reduction of internal resistance and enhancement of the capacity, can be further exhibited.

In the energy storage device, the positive electrode potential at an end-of-charge voltage in normal use is preferably 4.40 V (vs. Li/Li⁺) or more. In the energy storage device, a high discharge capacity can be effectively obtained when the energy storage device is charged at a relatively high end-of-charge voltage, i.e. when the positive electrode potential at an end-of-charge voltage is relatively high. Therefore, the energy storage device can be suitably used as an energy storage device having a positive electrode potential of 4.40 V (vs. Li/Li⁺) or more at an end-of-charge voltage in normal use. Here, the term "in normal use" is a case where the energy storage device is used while charge conditions recommended or specified in the energy storage device are employed, or a case where the energy storage device is used by applying a charger for the energy storage device when the charger is prepared.

In the energy storage device, the end-of-charge voltage in normal use is preferably 4.35 V or more. In the energy storage device, a high discharge capacity can be effectively obtained when the energy storage device is charged at a relatively high end-of-charge voltage. Therefore, the energy storage device can be suitably used as an energy storage device having an end-of-charge voltage of 4.35 V or more in normal use.

In the energy storage device, it is preferable to satisfy the formula (1): (V0 - V1) × A/100 > 1 ...(1), where V0 is an end-of-charge voltage in normal use, V1 is an end-of-discharge voltage, and A is a depth of discharge (%) when the energy storage device is discharged to a closed circuit voltage (V0 + V1)/2 in constant current discharge at a discharge rate 1C. The depth of discharge as used herein refers to a ratio obtained by dividing a discharge capacity at the time of discharging the energy storage device in constant current discharge at a discharge rate 1C from an end-of-charge voltage V0 to a predetermined voltage in normal use by a discharge capacity at the time of discharging the energy storage device in constant current discharge at a discharge rate 1C from an end-of-charge voltage V0 to an end-of-discharge voltage V1.

Graphite and hardly graphitizable carbon are different in gradient of a charge-discharge curve, graphite has a higher charge-discharge capacity in a lower potential range, and hardly graphitizable carbon has a higher charge-discharge capacity in a higher potential range. Thus, when a negative electrode in which graphite and hardly graphitizable carbon are mixed is used, graphite is primarily discharged at the initial stage of discharge in which the negative electrode potential is low, and when discharge progresses and the negative electrode potential is high, discharge of hardly graphitizable carbon primarily occurs. In addition, as described above, graphite can maintain a lower potential until the end of discharge as compared to hardly graphitizable carbon. On the basis of this, the above formula (1) is derived from a discharge curve of the energy storage device. That is, when the energy storage device includes a negative electrode in which the mass ratio of graphite and hardly graphitizable carbon is within a preferred range where the ratio of graphite is higher, the energy storage device satisfies the above formula (1). Thus, when the energy storage device satisfies the above formula (1), the effects of the energy storage device, i.e. reduction of internal resistance and enhancement of the capacity, are further suitably exhibited.

In addition, in the energy storage device, it is also preferable to satisfy the formula (2): (V0 - V)/(V0 - V1) ≤ 0.65 ...(2), where V0 is an end-of-charge voltage in normal use, V1 is an end-of-discharge voltage, and V is a closed circuit voltage at the time when the energy storage device is discharged to a depth of discharge of 90% at a discharge rate 1C.

Similarly to the above formula (1), the above formula (2) is derived from a discharge curve of the energy storage device on the basis of a difference in gradient of the charge-discharge curve between graphite and hardly graphitizable carbon. That is, when the energy storage device includes a negative electrode in which the mass ratio of graphite and hardly graphitizable carbon is within a preferred range where the ratio of graphite is higher, the energy storage device satisfies the above formula (2). Thus, when the energy storage device satisfies the above formula (2), the effects of the energy storage device, i.e. reduction of internal resistance and enhancement of the capacity, are further suitably exhibited.

Further, in the energy storage device, the ratio of a discharge capacity in a potential range of 0.02 V (vs. Li/Li⁺) to 0.2 V (vs. Li/Li⁺) to a discharge capacity in a potential range of 0.02 V (vs. Li/Li⁺) to 2.0 V (vs. Li/Li⁺) in the negative electrode is preferably 70% or more.

The ratio of the discharge capacity in the negative electrode is also based on a difference in gradient of the charge-discharge curve between graphite and hardly graphitizable carbon. When the mass ratio of graphite and hardly graphitizable carbon is within a preferred range where the ratio of graphite is higher, the ratio of the discharge capacity in the negative electrode of the energy storage device is 70% or more. Thus, when the ratio of the discharge capacity in the negative electrode of the energy storage device is 70% or more, the effects of the energy storage device, i.e. reduction of internal resistance and enhancement of the capacity, are further suitably exhibited.

### <Nonaqueous electrolyte energy storage device>

An energy storage device according to an embodiment of the present invention includes a positive electrode, a negative electrode, and a nonaqueous electrolyte. Hereinafter, a nonaqueous electrolyte secondary battery will be described as one example of the energy storage device. Normally, the positive electrode and the negative electrode form electrode assemblies stacked alternately by laminating or winding the positive electrode and the negative electrode with a separator interposed therebetween. The electrode assembly is placed in a battery case, and the nonaqueous electrolyte fills the battery case. The nonaqueous electrolyte is interposed between the positive electrode and the negative electrode. In addition, as the battery case, a well-known metal battery case, resin battery case or the like which is normally used as a battery case for a nonaqueous electrolyte secondary battery can be used.

### (Positive electrode)

The positive electrode includes a positive electrode substrate, or a positive active material layer disposed on the positive electrode substrate directly or with an intermediate layer interposed therebetween.

The positive electrode substrate has conductivity. As the material of the substrate, a metal such as aluminum, titanium, tantalum or stainless steel or an alloy thereof is used. Among them, aluminum and an aluminum alloy are preferable from the viewpoint of balance of potential resistance, the level of conductivity and cost. In addition, examples of the form of the positive electrode substrate include foils and vapor deposition films, with foils being preferable from the viewpoint of cost. That is, an aluminum foil is preferable as the positive electrode substrate. Examples of the aluminum or aluminum alloy may include A1085P and A3003P specified in JIS-H-4000 (2014).

The intermediate layer is a layer covering a surface of the positive electrode substrate, and contains conductive particles such as carbon particles, so that contact resistance between the positive electrode substrate and the positive active material layer is reduced. The configuration of the intermediate layer is not particularly limited, and can be formed from, for example, a composition containing a resin binder and conductive particles. The term "having conductivity" means that the volume resistivity measured in accordance with JIS-H-0505 (1975) is 10⁷ Ω · cm or less, and the term "non-conductive" means that the volume resistivity is more than 10⁷ Ω · cm.

The positive active material layer is formed of a so-called positive electrode mixture containing a positive active material. In addition, the positive electrode mixture that forms the positive active material layer contains optional components such as a conductive agent, a binder (binding agent), a thickener, and a filler as necessary.

Examples of the positive active material include composite oxides represented by LiₓMO_{y} (M represents at least one transition metal) (LiₓCoO₂, LiₓNiO₂, LiₓMnO₃, LiₓNi_{α}Co_{(1-α)}O₂, LiₓNi_{α}Mn_{β}Co_{(1-α-β)}O₂ and the like each having a layered α-NaFeO₂-type crystal structure; LiₓMn₂O₄,LiₓNi_{α}Mn_{(2-α)}O4 and the like having a spinel-type crystal structure), and polyanion compounds represented by Li_{w}Meₓ(XO_{y})_{z} (Me represents at least one transition metal, and X is, for example, P, Si, B or V) (LiFePO₄, LiMnPO₄, LiNiPO₄, LiCoPO₄, Li₃V₂(PO₄)₃, Li₂MnSiO₄, Li₂CoPO₄F and the like). Elements or polyanions in these compounds may be partially substituted with other elements or anionic species. In the positive active material layer, one of these compounds may be used singly, or two or more of these compounds may be used in mixture.

The conductive agent is not particularly limited as long as it is a conductive material that does not adversely affect battery performance. Examples of the conductive agent include natural or artificial graphite; carbon black such as furnace black, acetylene black and ketjen black; metals; and conductive ceramics. Examples of the shape of the conductive agent include powder shapes and fibrous shapes.

Examples of the binder (binding agent) include thermoplastic resins such as fluororesins (polytetrafluoroethylene (PTFE), polyvinylidene fluoride (PVDF), polyethylene, polypropylene and polyimide; elastomers such as ethylene propylene diene rubber (EPDM), sulfonated EPDM, styrene butadiene rubber (SBR) and fluorine rubber; and polysaccharide polymers.

Examples of the thickener include polysaccharide polymers such as carboxymethylcellulose (CMC) and methylcellulose. When the thickener has a functional group reactive with lithium, it is preferable to deactivate the functional group by methylation or the like in advance.

The filler is not particularly limited as long as it does not adversely affect battery performance. Examples of the main component of the filler include polyolefins such as polypropylene and polyethylene, silica, alumina, zeolite, glass and carbon.

### (Negative electrode)

The negative electrode includes a negative electrode substrate, or a negative active material layer disposed on the negative electrode substrate directly or with an intermediate layer interposed therebetween. The intermediate layer may have the same configuration as that of the intermediate layer for the positive electrode.

The negative electrode substrate may have the same configuration as that of the positive electrode substrate, but as a material, a metal such as copper, nickel, stainless steel or nickel-plated steel or an alloy thereof is used, and copper or a copper alloy is preferable. That is, a copper foil is preferable as the negative electrode substrate. Examples of the copper foil include rolled copper foils and electrolytic copper foils.

The negative active material layer is formed of a so-called negative electrode mixture containing a negative active material. In addition, the negative electrode mixture that forms the negative active material layer contains optional components such as a conductive agent, a binder (binding agent), a thickener, and a filler as necessary. For the optional components such as a conductive agent, a binder (binding agent), a thickener and a filler, the same components as in the positive active material layer can be used.

The negative active material layer contains graphite and hardly graphitizable carbon as a negative active material. The mass ratio of graphite to hardly graphitizable carbon (graphite/hardly graphitizable carbon) in the negative electrode (negative active material layer) is not particularly limited as long as the ratio of graphite is higher than the ratio of hardly graphitizable carbon, and the mass ratio of graphite to hardly graphitizable carbon may be 60/40 or more, but is preferably 70/30 or more, more preferably 80/20 or more, still more preferably 85/15 or more. In addition, the mass ratio of graphite to hardly graphitizable carbon (graphite/hardly graphitizable carbon) is preferably 96/4 or less, more preferably 90/10 or less. When the mass ratio of graphite and hardly graphitizable carbon is within the above-mentioned range, the internal resistance of the energy storage device can be further reduced, and a higher discharge capacity can be obtained when the energy storage device is charged at a relatively high end-of-charge voltage.

Preferably, the negative active material layer contains graphite particles and hardly graphitizable carbon particles as a negative active material. When graphite particles and hardly graphitizable carbon particles are present as separate particles in the negative active material layer, the effects of the energy storage device, i.e. reduction of internal resistance and enhancement of the capacity, can be more suitably exhibited.

The negative active material may further contain a negative active material other than graphite and hardly graphitizable carbon. As such other negative active material, a known material capable of absorbing and desorbing lithium ions is normally used, and specific examples include metals or semimetals such as Si and Sn; metal oxides or semimetal oxides such as Si oxides and Sn oxides; polyphosphoric acid compounds; and carbon materials other than graphite and hardly graphitizable carbon (easily graphitizable carbon etc.).

The lower limit of the total content ratio of the graphite and the hardly graphitizable carbon is preferably 90% by mass, more preferably 95% by mass, still more preferably 99% by mass based on the amount of the negative active material. By increasing the total content ratio of graphite and hardly graphitizable carbon as a negative active material as described above, the effects of the energy storage device, i.e. reduction of internal resistance and enhancement of the capacity, can be more effectively exhibited. The upper limit of the total content ratio may be 100% by mass.

The lower limit of the content of graphite in the entire negative active material layer is preferably 60% by mass, more preferably 70% by mass, still more preferably 80% by mass, especially preferably 85% by mass. In addition, the upper limit of the content ratio is preferably 96% by mass, more preferably 95% by mass, still more preferably 90% by mass. When the content ratio of graphite in the entire negative active material layer is within the above-mentioned range, the effects of the energy storage device, i.e. reduction of internal resistance and enhancement of the capacity, can be more effectively exhibited.

The lower limit of the content of hardly graphitizable carbon in the entire negative active material layer is preferably 4% by mass, more preferably 5% by mass, still more preferably 10% by mass. In addition, the upper limit of the content ratio is preferably 40% by mass, more preferably 30% by mass, still more preferably 20% by mass, especially preferably 15% by mass. When the content ratio of hardly graphitizable carbon in the entire negative active material layer is within the above-mentioned range, the effects of the energy storage device, i.e. reduction of internal resistance and enhancement of the capacity, can be more effectively exhibited.

When the negative active material layer contains graphite or hardly graphitizable carbon as a conductive agent or a filler, the content ratio of graphite in the entire negative active material layer is the total content ratio of graphite including graphite as a negative active material and graphite as a conductive agent etc. This also applies to hardly graphitizable carbon.

Further, the negative active material layer may contain a typical nonmetallic element such as B, N, P, F, Cl, Br or I, a typical metal element such as Li, Na, Mg, Al, K, Ca, Zn, Ga or Ge, or a transition metal element such as Sc, Ti, V, Cr, Mn, Fe, Co, Ni, Cu, Mo, Zr, Ta, Hf, Nb or W.

### (Separator)

As a material of the separator, for example, a woven fabric, a nonwoven fabric, a porous resin film or the like is used. Among them, a porous resin film is preferable from the viewpoint of strength, and a nonwoven fabric is preferable from the viewpoint of liquid retainability of the nonaqueous electrolyte. As a main component of the separator, for example, a polyolefin such as polyethylene or polypropylene is preferable from the viewpoint of strength, and a polyimide, an aramid or the like is preferable from the viewpoint of oxidative decomposition resistance. Further, these resins may be combined.

### (Nonaqueous electrolyte)

The nonaqueous electrolyte is formed by dissolving an electrolyte salt in a nonaqueous solvent, and includes fluorinated cyclic carbonate as the nonaqueous solvent.

Since nonaqueous solvent contains fluorinated cyclic carbonate, it is possible to suppress side reactions (e.g. oxidative decomposition of nonaqueous solvent etc.) that may occur during charge-discharge of the nonaqueous electrolyte energy storage device, leading to improvement charge-discharge cycle performance.

Examples of the fluorinated cyclic carbonate may include fluoroethylene carbonate (FEC), difluoroethylene carbonate, trifluoropropylene carbonate and the like can be mentioned, and FEC is preferable. The fluorinated cyclic carbonates may be used singly, or in combination of two or more thereof.

The content of the fluorinated cyclic carbonate is not particularly limited, but the lower limit of the content is preferably 2% by volume, more preferably 5% by volume, still more preferably 10% by volume based on the total amount of the nonaqueous solvent. On the other hand, the upper limit of the content is preferably 50% by volume, more preferably 30% by volume, still more preferably 25% by volume, even more preferably 20% by volume. That is, the content of the fluorinated cyclic carbonate based on the amount of the nonaqueous solvent is preferably 2% by volume or more and 50% by volume or less, more preferably 5% by volume or more and 30% by volume or less, more preferably 5% by volume or more and 25% by volume or less, still more preferably 10% by volume or more and 20% by volume or less. When the content of the fluorinated cyclic carbonate is not less than the lower limit, it is possible to effectively improve the charge-discharge cycle performance of the energy storage device using the nonaqueous electrolyte. In addition, when the content of the fluorinated cyclic carbonate is not more than the upper limit, it is possible to suppress an increase in internal resistance of the energy storage device using the nonaqueous electrolyte. That is, when the content of the fluorinated cyclic carbonate is within the above-mentioned range, it is possible to effectively improve the charge-discharge cycle performance of the energy storage device using the nonaqueous electrolyte, and it is possible to suppress an increase in internal resistance.

As a nonaqueous solvent other than fluorinated cyclic carbonate, a known nonaqueous solvent that is normally used as a nonaqueous solvent of a general nonaqueous electrolyte for an energy storage device can be used. Examples of the nonaqueous solvent include cyclic carbonate, chain carbonate, ester, ether, amide, sulfone, lactone and nitrile. Among them, it is preferable to use at least cyclic carbonate or chain carbonate, and it is more preferable to use chain carbonate. When cyclic carbonate and chain carbonate are used in combination, the ratio of the total volume of the fluorinated cyclic carbonate and other cyclic carbonate to the volume of chain carbonate (cyclic carbonate : chain carbonate) is not particularly limited, but for example, it is preferably 5/95 or more and 50/50 or less.

Examples of the cyclic carbonate may include ethylene carbonate (EC), propylene carbonate (PC), butylene carbonate (BC), vinylene carbonate (VC), vinylethylene carbonate (VEC), chloroethylene carbonate, styrene carbonate, catechol carbonate, 1-phenylvinylene carbonate and 1,2-diphenylvinylene carbonate, and among them, EC is preferable.

Examples of the chain carbonate may include diethyl carbonate (DEC), dimethyl carbonate (DMC), ethyl methyl carbonate (EMC) and diphenyl carbonate, and among them, EMC is preferable.

As the electrolyte salt, a known electrolyte salt that is normally used as a general electrolyte salt of a nonaqueous electrolyte for an energy storage device can be used. Examples of the electrolyte salt may include lithium salts, sodium salts, potassium salts, magnesium salts, and onium salts, and lithium salts are preferable.

Examples of the lithium salt may include inorganic lithium salts such as LiPF₆, LiPO₂F₂, LiBF₄, LiClO₄ and LiN(SO₂F)₂, and lithium salts having a fluorohydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃. Among them, inorganic lithium salts are preferable, and LiPF₆ is more preferable.

The lower limit of the content of the electrolyte salt in the nonaqueous electrolyte is preferably 0.1 mol/l, more preferably 0.3 mol/l, still more preferably 0.5 mol/l, especially preferably 0.7 mol/l. On the other hand, the upper limit of the content of the electrolyte salt in the nonaqueous electrolyte is less than 2.0 mol/l, preferably 1.8 mol/l, more preferably 1.6 mol/l, still more preferably 1.5 mol/l. When the content of the electrolyte salt is not more than the upper limit, the internal resistance of the energy storage device using the nonaqueous electrolyte can be reduced.

The nonaqueous electrolyte may contain components other than the electrolyte salt and the nonaqueous solvent as long as the effect of the present invention is not impaired. Examples of the other components may include various additives that are contained in a general nonaqueous electrolyte for an energy storage device. However, the content of the other components in the nonaqueous electrolyte may be preferably 5% by mass or less, more preferably 3% by mass or less.

Examples of the other components may include sultones (cyclic sulfonic acid esters) such as 1,3-propene sultone, 1,4-butene sultone, 1,3-propane sultone, 1,4-butane sultone and 2,4-butane sultone. When the nonaqueous electrolyte contains sultone, the charge-discharge cycle performance of the energy storage device using the nonaqueous electrolyte can be improved. Among the sultones, unsaturated sultones are preferable, and 1,3-propene sultone is more preferable. The lower limit of the content of sultone in the nonaqueous electrolyte is not particularly limited, and is, for example, 0.1% by mass, preferably 1% by mass. On the other hand, the upper limit of the content of the sultone is, for example, 5% by mass, preferably 3% by mass.

### (Charge-discharge conditions etc.)

The end-of-charge voltage at the time of normal use of the energy storage device is not particularly limited, and may be, for example, 4.0 V or 4.2 V or more, but is preferably 4.35 V or more. The upper limit of the end-of-charge voltage is, for example, 5.0 V, preferably 4.8 V, more preferably 4.5 V. The positive electrode potential at an end-of-charge voltage at the time of normal use of the energy storage device is not particularly limited, and may be, for example, 4.10 V (vs. Li/Li⁺) or 4.30 V (vs. Li/Li⁺) or more, but is preferably 4.40 V (vs. Li/Li⁺) or more, more preferably 4.45 V (vs. Li/Li⁺). The upper limit of the positive electrode potential at an end-of-charge voltage is, for example, 5.10 V (vs. Li/Li⁺), preferably 4.90 V (vs. Li/Li⁺), more preferably 4.60 V (vs. Li/Li⁺).

In the energy storage device, it is preferable to satisfy the formula (1): (V0 - V1) × A/100 > 1 ...(1), where V0 is an end-of-charge voltage in normal use, V1 is an end-of-discharge voltage, and A is a depth of discharge (%) when the energy storage device is discharged to a closed circuit voltage (V0 + V1)/2 in constant current discharge at a discharge rate 1C.

An example of the specific range of the end-of-charge voltage V0 is as described above. Although the end-of-discharge voltage V1 is not particularly limited, and for example, the lower limit may be 2.5 V, or may be 2.75 V. In addition, the upper limit of V1 may be 3.0 V, or may be 2.9 V

The lower limit of the value on the left side of the above formula (1) is more preferably 1.02, still more preferably 1.04. The upper limit of this value is, for example, 1.2, and may be 1.1, or may be 1.05.

In the energy storage device, it is also preferable to satisfy the formula (2): (V0 - V)/(V0 - V1) ≤ 0.65 ...(2), where V0 is an end-of-charge voltage in normal use, V1 is an end-of-discharge voltage, and V is a closed circuit voltage at the time when the energy storage device is discharged to a depth of discharge of 90% at a discharge rate 1C.

Examples of the specific ranges of the end-of-charge voltage V0 and the end-of-discharge voltage V1 are as described above. The lower limit of the value on the left side of the above formula (2) is, for example, 0.5, and may be 0.55, or may be 0.6.

In the energy storage device, the lower limit of the ratio of a discharge capacity in a potential range of 0.02 V (vs. Li/Li⁺) to 0.2 V (vs. Li/Li⁺) to a discharge capacity in a potential range of 0.02 V (vs. Li/Li⁺) to 2.0 V (vs. Li/Li⁺) in the negative electrode is preferably 70%, more preferably 72%. The upper limit of the ratio is not particularly limited, and may be, for example, 80%, preferably 76%, more preferably 75%.

The ratio of a discharge capacity in a potential range of 0.02 V (vs. Li/Li⁺) to 0.2 V (vs. Li/Li⁺) to a discharge capacity in a potential range of 0.02 V (vs. Li/Li⁺) to 2.0 V (vs. Li/Li⁺) in the negative electrode is determined in the following manner. First, a negative electrode is prepared. The negative electrode to be prepared may be obtained by providing a negative active material layer containing a negative active material and a conductive agent, a binder or the like as necessary on a conductive negative electrode substrate, or obtained by unsealing a case of a nonaqueous electrolyte energy storage device in an atmosphere at a dew point of -50°C or lower, taking out an electrode assembly from the case, and removing a stacked positive electrode and separator. A nonaqueous electrolyte energy storage device having the negative electrode and metal lithium as a counter electrode is prepared. For the nonaqueous electrolyte, a nonaqueous electrolyte obtained by mixing EMC (ethylmethyl carbonate) and FEC (fluoroethylene carbonate) at a volume ratio of 90 : 10, and adding LiPF₆ as an electrolyte salt at a concentration of 1.0 mol/l is used. For the prepared nonaqueous electrolyte energy storage device, constant current constant potential charge (lithium insertion) is performed at 25°C at a charge rate of 0.1C and an end-of-charge potential of 0.02 V (vs. Li/Li⁺) for a total charge time of 13 hours, and a quiescent period of 10 minutes is then provided. Thereafter, a constant current discharge (lithium desorption) is performed at a discharge rate of 0.1C and an end-of-charge potential of 2.0V (vs. Li/Li⁺), a quiescent period of 10 minutes is then provided. The charge-discharge are carried out by two cycles, and the ratio of a discharge capacity in a potential range of 0.02 V to 0.2 V (vs. Li/Li⁺) to a discharge capacity in a potential range of 0.02 V(vs. Li/Li⁺) to 2.0 V (vs. Li/Li⁺) at the second cycle is the ratio of a discharge capacity in a potential range of 0.02 V (vs. Li/Li⁺) to 0.2 V (vs. Li/Li⁺) to a discharge capacity in a potential range of 0.02 V (vs. Li/Li⁺) to 2.0 V (vs. Li/Li⁺) in the negative electrode.

### (Method for producing nonaqueous electrolyte energy storage device)

The method for producing the energy storage device is not particularly limited, and known methods can be combined. The production method includes, for example, steps of: preparing a positive electrode and a negative electrode; preparing a nonaqueous electrolyte; forming alternately stacked electrode assemblies by laminating or winding the positive electrode and the negative electrode with a separator interposed therebetween; placing the positive electrode and the negative electrode in a battery case; and injecting the nonaqueous electrolyte in the battery case. The injection can be performed by a known method. After the injection, a nonaqueous electrolyte secondary battery (nonaqueous electrolyte energy storage device) can be obtained by sealing the injection port.

### <Other Embodiments>

The present invention is not limited to the above-described embodiment, but may be carried out in modes in which various changes and modifications are made in addition to the above-described modes. For example, in the above-described embodiment, the mode in which the nonaqueous electrolyte energy storage device is a nonaqueous electrolyte secondary battery has been mainly described, but the nonaqueous electrolyte energy storage device may be other nonaqueous electrolyte energy storage device. Examples of the other nonaqueous electrolyte energy storage device include capacitors (electric double layer capacitors and lithium ion capacitors).

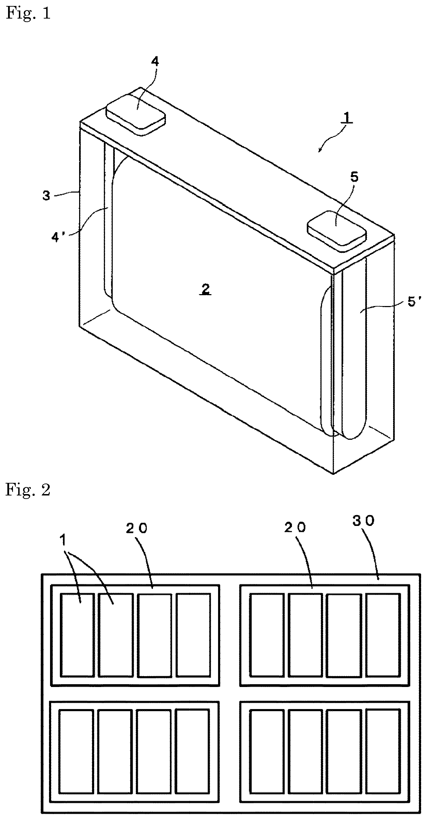

Fig. 1 shows a schematic view of a rectangular nonaqueous electrolyte secondary battery 1 as one embodiment of a nonaqueous electrolyte energy storage device according to the present invention. Fig. 1 is a view showing the inside of a battery case in a perspective manner. In the nonaqueous electrolyte secondary battery 1 shown in Fig. 1, an electrode assembly 2 is contained in a battery case 3. The electrode assembly 2 is formed by winding a positive electrode and a negative electrode with a separator interposed between the positive electrode and the negative electrode, the positive electrode including a positive active material, the negative electrode including a negative active material. The positive electrode is electrically connected to a positive electrode terminal 4 through a positive electrode lead 4' and the negative electrode is electrically connected to a negative electrode terminal 5 through a negative electrode lead 5'.

The configuration of the nonaqueous electrolyte energy storage device according to the present invention is not particularly limited, and examples thereof include cylindrical energy storage devices, prismatic energy storage devices (rectangular energy storage devices) and flat energy storage devices. The present invention can also be implemented as an energy storage apparatus including a plurality of nonaqueous electrolyte energy storage devices described above. Fig. 2 shows one embodiment of an energy storage apparatus. In Fig. 2, an energy storage apparatus 30 includes a plurality of energy storage units 20. Each of the energy storage units 20 includes a plurality of nonaqueous electrolyte energy storage devices 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described further in detail by way of examples, but the present invention is not limited to the following examples.

### [Example 1]

EMC (ethylmethyl carbonate) and FEC (fluoroethylene carbonate) were mixed at a volume ratio of 90 : 10, and LiPF₆ as an electrolyte salt was added to the mixed solvent at a concentration of 1.0 mol/l to obtain a nonaqueous electrolyte.

A negative electrode having as a negative active material a mixture of graphite (d 002 = 0.336 nm) and hardly graphitizable carbon (d 002 = 0.380 nm) at a mass ratio of 90 : 10 was prepared. Here, the total content ratio of graphite and hardly graphitizable carbon was 100% by mass based on the amount of the negative active material, the content ratio of graphite based on the total amount of the negative active material layer was 86.4% by mass, and the content ratio of hardly graphitizable carbon based on the total amount of the negative active material layer was 9.6% by mass. In addition, a positive electrode having LiNi_{1/3}Mn_{1/3}Co_{1/3}O₂ as a positive active material was prepared. Subsequently, an electrode assembly was prepared by laminating the positive electrode and the negative electrode with a separator interposed therebetween, the separator being made of a microporous polyethylene film. The electrode assembly was placed in a battery case made of a metal resin composite film, the nonaqueous electrolyte was injected into the battery case, and the battery case was then sealed by thermal welding to obtain a nonaqueous electrolyte energy storage device (flat lithium ion secondary battery) of Example 1.

### [Example 2 and Comparative Examples 1 to 5]

Except that the mass ratio of graphite and hardly graphitizable carbon as a negative active material was set as shown in Table 1, the same procedure as in Example 1 was carried out to obtain nonaqueous electrolyte energy storage devices (flat lithium ion secondary batteries) of Example 2 and Comparative Examples 1 to 5.

### [Evaluation]

### [Evaluation at end-of-charge voltage of 4.20 V]

For the obtained nonaqueous electrolyte energy storage devices, constant current constant voltage charge was performed at 25°C at a charge rate of 0.2C and an end-of-charge voltage of 4.20 V for a total charge time of 8 hours, and a quiescent period of 10 minutes was then provided. Thereafter, constant current discharge was performed at a discharge rate of 0.2C and an end-of-discharge voltage of 2.75 V, and a quiescent period of 10 minutes was then provided. The charge-discharge was carried out by two cycles to perform initial charge-discharge. Here, the positive electrode potential at an end-of-charge voltage was about 4.3 V (vs. Li/Li⁺). Thereafter, the internal resistance of each of these nonaqueous electrolyte energy storage devices was measured by applying an alternating current (AC) of 1 kHz using an impedance meter. The internal resistance is shown in Table 1 as a resistance ratio based on the value in Comparative Example 5 (100%). Subsequently, in a thermostatic bath at 45°C, constant current constant voltage charge was performed at a charge rate of 1.0C and an end-of-charge voltage of 4.20 V for a total charge time of 3 hours, and a quiescent period of 10 minutes was then provided. Thereafter, constant current discharge was performed at a discharge rate of 1.0C and an end-of-discharge voltage of 2.75 V, and a quiescent period of 10 minutes was then provided. The charge-discharge was carried out by hundred cycles. The discharge capacity at the first cycle and the discharge capacity at the 100th cycle in the charge-discharge cycle test are shown in Table 1 as relative values based on the values in Comparative Example 1 (100%).

### [Evaluation at end-of-charge voltage of 4.35 V]

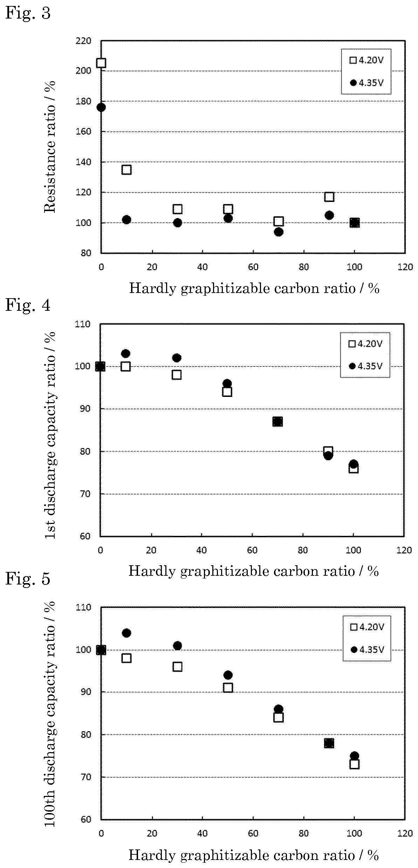

For the obtained nonaqueous electrolyte energy storage devices, constant current constant voltage charge was performed at 25°C at a charge rate of 0.2C and an end-of-charge voltage of 4.35 V for a total charge time of 8 hours, and a quiescent period of 10 minutes was then provided. Thereafter, constant current discharge was performed at a discharge rate of 0.2C and an end-of-discharge voltage of 2.75 V, and a quiescent period of 10 minutes was then provided. The charge-discharge was carried out by two cycles to perform initial charge-discharge. Here, the positive electrode potential at an end-of-charge voltage was about 4.45 V (vs. Li/Li⁺). Thereafter, the internal resistance of each of these nonaqueous electrolyte energy storage devices was measured by applying an alternating current (AC) of 1 kHz using an impedance meter. The internal resistance is shown in Table 1 as a resistance ratio based on the value in Comparative Example 5 (100%). Subsequently, in a thermostatic bath at 45°C, constant current constant voltage charge was performed at a charge rate of 1.0C and an end-of-charge voltage of 4.35 V for a total charge time of 3 hours, and a quiescent period of 10 minutes was then provided. Thereafter, constant current discharge was performed at a discharge rate of 1.0C and an end-of-discharge voltage of 2.75 V, and a quiescent period of 10 minutes was then provided. The charge-discharge was carried out by hundred cycles. The discharge capacity at the first cycle and the discharge capacity at the 100th cycle in the charge-discharge cycle test are shown in Table 1 as relative values based on the values in Comparative Example 1 (100%). Figs. 3 to 5 show relationships between the ratio of hardly graphitizable carbon and the resistance ratio, the discharge capacity at the first cycle or the discharge capacity at the 100th cycle.

**[Table 1]**

| | Graphite : hardly graphitizable carbon | 4.20 V | | | 4.35 V | | |
|---|---|---|---|---|---|---|---|
| | | Resistance ratio (%) | 1st discharge capacity ratio (%) | 100th discharge capacity ratio (%) | Resistance ratio (%) | 1st discharge capacity ratio (%) | 100th discharge capacity ratio (%) |
| Comparative Example 1 | 100:0 | 205 | 100 | 100 | 176 | 100 | 100 |
| Example 1 | 90:10 | 135 | 100 | 98 | 102 | 103 | 104 |
| Example 2 | 70:30 | 109 | 98 | 96 | 100 | 102 | 101 |
| Comparative Example 2 | 50:50 | 109 | 94 | 91 | 103 | 96 | 94 |
| Comparative Example 3 | 30:70 | 101 | 87 | 84 | 94 | 87 | 86 |
| Comparative Example 4 | 10:90 | 117 | 80 | 78 | 105 | 79 | 78 |
| Comparative Example 5 | 0:100 | 100 | 76 | 73 | 100 | 77 | 75 |

As shown in Table 1 above and Figs. 3 to 5, the nonaqueous electrolyte energy storage devices of Examples 1 and 2, in which a mixture of graphite and hardly graphitizable carbon is used for a negative active material have reduced internal resistance as compared to Comparative Example 1 using only graphite for a negative active material, and have a higher discharge capacity as compared to Comparative Example 5 using only hardly graphitizable carbon. It is apparent that in particular, when the end-of-charge voltage is 4.35 V, not only internal resistance remarkably reduced as compared to Comparative Example 1, but also the discharge capacity is high.

### [Example 3]

EMC (ethylmethyl carbonate) and FEC (fluoroethylene carbonate) were mixed at a volume ratio of 90 : 10, LiPF₆ as an electrolyte salt was added to the mixed solvent at a ratio of 1.0 mol/l, and 1,3-propene sultone to was added at a ratio of 2% by mass obtain a nonaqueous electrolyte.

A negative electrode having as a negative active material a mixture of graphite and hardly graphitizable carbon at a mass ratio of 90 : 10 was prepared. Here, the total content ratio of graphite and hardly graphitizable carbon in the negative active material was 100% by mass, the content ratio of graphite based on the total amount of the negative active material layer was 86.4% by mass, and the content ratio of hardly graphitizable carbon based on the total amount of the negative active material layer was 9.6% by mass. In addition, a positive electrode having LiNi_{1/3}Mn_{/3}Co_{1/3}O₂ as a positive active material was prepared. Subsequently, an electrode assembly was prepared by laminating the positive electrode and the negative electrode with a separator interposed therebetween, the separator being made of a microporous polyethylene film. The electrode assembly was placed in an aluminum battery case, the nonaqueous electrolyte was injected into the battery case, and the battery case was then sealed to obtain a nonaqueous electrolyte energy storage device (prismatic lithium ion secondary battery) of Example 3.

### [Comparative Examples 6 to 10]

Except that the mass ratio of graphite and hardly graphitizable carbon as a negative active material and the mixed solvent of the nonaqueous electrolyte were set as shown in Table 2, the same procedure as in Example 3 was carried out to obtain nonaqueous electrolyte energy storage devices (prismatic lithium ion secondary batteries) of Comparative Examples 6 to 10.

### [Evaluation]

The same procedure as described in the above section [Evaluation at end-of-charge voltage of 4.35 V] was carried out to subject these nonaqueous electrolyte energy storage devices to initial charge-discharge. Thereafter, the internal resistance of each of these nonaqueous electrolyte energy storage devices was measured. Table 2 shows the internal resistance as a resistance ratio based on the value in Comparative Example 7 (100%) for Example 3 and Comparative Examples 6 and 7), and as a resistance ratio based on the value in Comparative Example 10 (100%) for Comparative Examples 8 to 10.

**[Table 2]**

| | Graphite : hardly graphitizable carbon | Solvent | Resistance ratio (%) |
|---|---|---|---|
| Comparative Example 6 | 100:0 | EMC:FEC=90:10 | 111 |
| Example 3 | 90:10 | EMC:FEC=90:10 | 103 |
| Comparative Example 7 | 0:100 | EMC:FEC=90:10 | 100 |
| Comparative Example 8 | 100:0 | EMC:EC=70:30 | 104 |
| Comparative Example 9 | 90:10 | EMC:EC=70:30 | 103 |
| Comparative Example 10 | 0:100 | EMC:EC=70:30 | 100 |

As shown in Table 2 above, comparison between Comparative Example 6 and Example 3 using FEC as fluorinated cyclic carbonate for the nonaqueous electrolyte shows that Example 3 using a mixture of 10% by mass of hardly graphitizable carbon and 90% by mass of graphite for the negative active material has remarkably reduced internal resistance as compared to Comparative Example 6 using only graphite for the negative active material. On the other hand, comparison of Comparative Examples 8 to 10 in which FEC was not used for the nonaqueous electrolyte shows that the influence of the composition of the negative active material on internal resistance is small. That is, the effect of reducing internal resistance of the nonaqueous electrolyte energy storage device by using a negative electrode obtained by mixing graphite with hardly graphitizable carbon is a specific effect which is obtained when fluorinated cyclic carbonate is used for the nonaqueous electrolyte.

### [Evaluation of discharge curve characteristics]

Using the nonaqueous electrolyte energy storage devices of Examples 1 and 2 and Comparative Examples 1 to 5, the same procedure as described in the above section [Evaluation at end-of-charge voltage of 4.20 V] was carried out to perform initial charge-discharge, constant current constant voltage charge was then performed at 25°C at a charge rate of 1.0C and an end-of-charge voltage (V0) of 4.20 V for a total charge time of 3 hours, and a quiescent period of 10 minutes was then provided. Thereafter, constant current discharge was performed at an end-of-discharge voltage (V1) of 2.75 V and a discharge rate of 1.0C. In addition, using these nonaqueous electrolyte energy storage devices, the same procedure as described in the above section [Evaluation at end-of-charge voltage of 4.35 V] was carried out to perform initial charge-discharge, constant current constant voltage charge was then performed at 25°C at a charge rate of 1.0C and an end-of-charge voltage (V0) of 4.35 V for a total charge time of 3 hours, and a quiescent period of 10 minutes was then provided. Thereafter, constant current discharge was performed at an end-of-discharge voltage (V1) of 2.75 V and a discharge rate of 1.0C. Table 3 shows the values of (V0 - V1) × A/100 based on the discharge curves in the constant current discharge, where A is a depth of discharge (%) at the time of performing discharge to a closed circuit voltage (V0 + V1)/2.

**[Table 3]**

| | Graphite : hardly graphitizable carbon | V0 = 4.20 V | | V0 = 4.35 V | |
|---|---|---|---|---|---|
| | | Depth of discharge (A) (%) | (V0-V1) × A/100 | Depth of discharge (A) (%) | (V0-V1) × A/100 |
| Comparative Example 1 | 100:0 | 71.5 | 1.037 | 60.1 | 0.962 |
| Example 1 | 90:10 | 71.9 | 1.043 | 62.6 | 1.001 |
| Example 2 | 70:30 | 72.2 | 1.047 | 62.7 | 1.003 |
| Comparative Example 2 | 50:50 | 70.1 | 1.016 | 61.7 | 0.987 |
| Comparative Example 3 | 30:70 | 62.6 | 0.907 | 59.5 | 0.952 |
| Comparative Example 4 | 10:90 | 53.4 | 0.774 | 53.6 | 0.858 |
| Comparative Example 5 | 0:100 | 50.9 | 0.738 | 51.0 | 0.816 |

In addition, Table 4 shows the values of (V0 - V)/(V0 - V1) based on the discharge curves, where V is a closed circuit voltage at the time of performing discharge to a depth of discharge of 90%.

**[Table 4]**

| | Graphite : hardly graphitizable carbon | Closed circuit voltage position at depth of discharge of 90% (V0 - V)/(V0 - V1) | |
|---|---|---|---|
| | | V0 = 4.20 V | V0 = 4.35 V |
| Comparative Example 1 | 100:0 | 0.59 | 0.58 |
| Example 1 | 90:10 | 0.61 | 0.58 |
| Example 2 | 70:30 | 0.65 | 0.64 |
| Comparative Example 2 | 50:50 | 0.77 | 0.72 |
| Comparative Example 3 | 30:70 | 0.82 | 0.81 |
| Comparative Example 4 | 10:90 | 0.87 | 0.84 |
| Comparative Example 5 | 0:100 | 0.88 | 0.86 |

When a mixture of graphite and hardly graphitizable carbon is used as a negative active material as described above, a high closed circuit voltage can be maintained until the end of discharge when the mass ratio of graphite is relatively high This is indicated by the above formulae (1) and (2).

That is, when the value of (V0 - V1) × A/100 is large in the formula (1), the ratio of the discharge capacity is large until the potential reaches (V0 - V1)/2. In addition, when the value of (V0 - V)/(V0 - V1) is small in the formula (2), a high closed circuit voltage is maintained even at a depth of discharge of 90%. It is apparent that in Examples 1 and 2, the value of (V0 - V1) × A/100 is more than 1, the value of (V0 - V)/(V0 - V1) is 0.65 or less, and a high closed circuit voltage can be maintained until the end of discharge. Further, in Examples 1 and 2, the mass of graphite is larger than the mass of hardly graphitizable carbon, and the above-described results show that internal resistance can be reduced, and a high discharge capacity can be obtained in charge performed at a relatively high end-of-charge voltage. In other words, when the above formula (1) or (2) is satisfied, it is considered that the ratio of graphite may be higher in the mass ratio of graphite and hardly graphitizable carbon.

### [Examples 4 to 7 and Comparative Examples 11 and 12]

Except that the mass ratio of graphite and hardly graphitizable carbon as a negative active material was set as shown in Table 5, and in place of the positive electrode, metal lithium was used as a counter electrode, the same procedure as in Example 1 was carried out to obtain nonaqueous electrolyte energy storage devices of Examples 4 to 7 and Comparative Examples 11 and 12. For the obtained nonaqueous electrolyte energy storage device, constant current constant potential charge (lithium insertion) was performed at 25°C at a charge rate of 0.1C and an end-of-charge potential of 0.02 V (vs. Li/Li⁺) for a total charge time of 13 hours, and a quiescent period of 10 minutes was then provided. Thereafter, a constant current discharge (lithium desorption) was performed at a discharge rate of 0.1C and an end-of-charge potential of 2.0V (vs. Li/Li⁺), a quiescent period of 10 minutes was then provided. The charge-discharge was carried out by two cycles. Table 5 shows the ratio of a discharge capacity in a potential range of 0.02 to 0.2 V (vs. Li/Li⁺) to a discharge capacity in a potential range of 0.02 V (vs. Li/Li⁺) to 2.0 V (vs. Li/Li⁺) at the second cycle here.

**[Table 5]**

| | Graphite : hardly graphitizable carbon | 0.02-0.2 V discharge capacity ratio (%) |
|---|---|---|
| Comparative Example 11 | 100:0 | 77 |
| Example 4 | 90:10 | 75 |
| Example 5 | 80:20 | 75 |
| Example 6 | 70:30 | 72 |
| Example 7 | 60:40 | 70 |
| Comparative Example 12 | 0:100 | 40 |

As shown in Table 5, use of a mixture of graphite and hardly graphitizable carbon as a negative active material ensures that when the mass of graphite is large, and the mass of hardly graphitizable carbon is small, the ratio of the discharge capacity in a potential range of 0.02 to 0.2 V (vs. Li/Li⁺) in the negative electrode is high, and a low potential can be maintained until the end of discharge. In other words, when the ratio of the discharge capacity in a potential range of 0.02 to 0.2 V (vs. Li/Li⁺) in the negative electrode is 70% or more, it is considered that the ratio of graphite may be higher in the mass ratio of graphite and hardly graphitizable carbon.

### [Example 8 and Comparative Example 13]

Except that the content of LiPF₆ as an electrolyte salt was changed to a content as shown in Table 6, the same procedure as in Example 1 was carried out to obtain nonaqueous electrolyte energy storage devices (flat lithium ion secondary batteries) of Example 8 and Comparative Example 13.

### [Evaluation]

The same procedure as described in the above section [Evaluation at end-of-charge voltage of 4.35 V] was carried out to subject these nonaqueous electrolyte energy storage devices to initial charge-discharge. Thereafter, the internal resistance of each of these nonaqueous electrolyte energy storage devices was measured at 25°C. The internal resistance is shown in Table 6 as a resistance ratio based on the value in Example 1 (100%). Subsequently, constant current constant voltage charge was performed at 25°C at a charge current of 0.2C and an end-of-charge voltage of 4.35 V for a total charge time of 8 hours, and a quiescent period of 10 minutes was then provided. Thereafter, constant current discharge was performed at a discharge current of 0.2C and an end-of-discharge voltage of 2.75 V. The discharge capacity here is shown in Table 6 as a discharge capacity ratio based on the value in Example 1 (100%). For reference, the value in Example 1 is also shown.

**[Table 6]**

| | Li salt concentration | 4.35 V | |
|---|---|---|---|
| | | Resistance ratio (%) | 1st discharge capacity ratio (%) |
| Example 1 | 1.0 | 100 | 100 |
| Example 8 | 1.2 | 95 | 100 |
| Comparative Example 13 | 2.0 | 118 | 99 |

As shown in the above Table 6, the nonaqueous electrolyte energy storage devices of Examples 1 and 8 in which the content of the electrolyte salt was less than 2.0 mol/l reduced internal resistance as compared to Comparative Example 13 in which the content of the electrolyte salt was 2.0 mol/l.

### [Examples 9 to 11]

Except that a nonaqueous electrolyte obtained by mixing EMC and FEC at a volume ratio as shown in Table 7 was used, the same procedure as in Example 1 was carried out to obtain nonaqueous electrolyte energy storage devices (flat lithium ion secondary batteries) of Examples 9 to 11.

### [Evaluation]

The same procedure as described in the above section [Evaluation at end-of-charge voltage of 4.35 V] was carried out to subject these nonaqueous electrolyte energy storage devices to initial charge-discharge. Thereafter, the internal resistance of each of these nonaqueous electrolyte energy storage devices was measured at 25°C. The internal resistance is shown in Table 7 as a resistance ratio based on the value in Example 1 (100%). Subsequently, constant current constant voltage charge was performed at 25°C at a charge current of 0.2C and an end-of-charge voltage of 4.35 V for a total charge time of 8 hours, and a quiescent period of 10 minutes was then provided. Thereafter, constant current discharge was performed at a discharge current of 0.2C and an end-of-discharge voltage of 2.75 V. The discharge capacity here is shown in Table 7 as a discharge capacity ratio based on the value in Example 1 (100%). For reference, the value in Example 1 is also shown.

**[Table 7]**

| | EMC:FEC | 4.35 V | |
|---|---|---|---|
| | | Resistance ratio (%) | Discharge volume ratio (%) |
| Example 9 | 80:20 | 85 | 100 |
| Example 1 | 90:10 | 100 | 100 |
| Example 10 | 95:5 | 107 | 99 |
| Example 11 | 98:2 | 117 | 99 |

As shown in Table 7 above, the nonaqueous electrolyte energy storage devices of Examples 1 and 9 to 11, which contain FEC as a nonaqueous solvent, exhibited equivalent discharge capacities. In addition, the nonaqueous electrolyte energy storage devices of Examples 1, 9 and 10, which contain 5% by volume or more of FEC as a nonaqueous solvent, reduced internal resistance as compared to the nonaqueous electrolyte energy storage device of Example 11, which contains 2% by volume of FEC, and the nonaqueous electrolyte energy storage devices of Examples 1 and 9, whichcontain 10% by volume or more of FEC, remarkably reduced internal resistance.

### INDUSTRIAL APPLICABILITY

The present invention can be applied to nonaqueous electrolyte energy storage devices which are used as power sources for electronic devices such as personal computers and communication terminals, automobiles and the like.

### DESCRIPTION OF REFERENCE SIGNS

- 1: Nonaqueous electrolyte energy storage device
- 2: Electrode assembly
- 3: Battery case
- 4: Positive electrode terminal
- 4': Positive electrode lead
- 5: Negative electrode terminal
- 5': Negative electrode lead
- 20: Energy storage unit
- 30: Energy storage apparatus

## Claims

1. A nonaqueous electrolyte energy storage device comprising:
a nonaqueous electrolyte containing a nonaqueous solvent containing fluorinated cyclic carbonate, and an electrolyte salt; and
a negative electrode containing graphite and hardly graphitizable carbon,
wherein
a mass of the graphite is larger than a mass of the hardly graphitizable carbon, and
a content of the electrolyte salt in the nonaqueous electrolyte is less than 2.0 mol/l,
**characterized in that** a content of the fluorinated cyclic carbonate in the nonaqueous solvent is 5% by volume or more and less than 25% by volume.

2. The nonaqueous electrolyte energy storage device according to claim 1, wherein a mass ratio of the graphite to the hardly graphitizable carbon (graphite/hardly graphitizable carbon) is 70/30 or more and less than 80/20.

3. The nonaqueous electrolyte energy storage device according to claim 1 or 2, wherein
the negative electrode contains the graphite and the hardly graphitizable carbon as a negative active material, and
a total content ratio of the graphite and the hardly graphitizable carbon is 90% by mass or more based on an amount of the negative active material.

4. The nonaqueous electrolyte energy storage device according to any one of claims 1 to 3, wherein the negative electrode contains graphite particles and hardly graphitizable carbon particles.

5. The nonaqueous electrolyte energy storage device according to any one of claims 1 to 4, wherein the positive electrode potential at an end-of-charge voltage in normal use is 4.40 V (vs. Li/Li⁺) or more.

6. The nonaqueous electrolyte energy storage device according to any one of claims 1 to 5, wherein the end-of-charge voltage in normal use is 4.35 V or more.

## Patentansprüche

1. Energiespeichervorrichtung mit nichtwässrigem Elektrolyt, umfassend:
einen nichtwässrigen Elektrolyt, enthaltend ein nichtwässriges Lösungsmittel, das fluoriertes cyclisches Carbonat enthält, und ein Elektrolytsalz; und
eine negative Elektrode, enthaltend Graphit und schwer graphitierbaren Kohlenstoff,
wobei
eine Masse des Graphits größer als eine Masse des schwer graphitierbaren Kohlenstoffs ist und
ein Anteil des Elektrolytsalzes in dem nichtwässrigem Elektrolyt weniger als 2,0 mol/l beträgt,
**dadurch gekennzeichnet, dass** ein Anteil des fluorierten cyclischen Carbonats in dem nichtwässrigen Lösungsmittel 5 Vol.-% oder mehr und weniger als 25 Vol.-% beträgt.

2. Energiespeichervorrichtung mit nichtwässrigem Elektrolyt nach Anspruch 1, wobei ein Massenverhältnis des Graphits zu dem schwer graphitierbaren Kohlenstoff (Graphit/schwer graphitierbarer Kohlenstoff) 70/30 oder mehr und weniger als 80/20 beträgt.

3. Energiespeichervorrichtung mit nichtwässrigem Elektrolyt nach Anspruch 1 oder 2, wobei
die negative Elektrode den Graphit und den schwer graphitierbaren Kohlenstoff als Negativ-Aktivmaterial enthält und
ein Gesamtgehaltanteil des Graphits und des schwer graphitierbaren Kohlenstoffs 90 Masse-% oder mehr, bezogen auf eine Menge des Negativ-Aktivmaterials, beträgt.

4. Energiespeichervorrichtung mit nichtwässrigem Elektrolyt nach einem der Ansprüche 1 bis 3, wobei die negative Elektrode Graphitpartikel und Partikel aus schwer graphitierbarem Kohlenstoff enthält.

5. Energiespeichervorrichtung mit nichtwässrigem Elektrolyt nach einem der Ansprüche 1 bis 4, wobei das Potenzial der positiven Elektrode bei einer Ladeschlussspannung bei normalem Gebrauch 4,40 V (gegen Li/Li⁺) oder mehr beträgt.

6. Energiespeichervorrichtung mit nichtwässrigem Elektrolyt nach einem der Ansprüche 1 bis 5, wobei die Ladeschlussspannung bei normalem Gebrauch 4,35 V oder mehr beträgt.

## Revendications

1. Dispositif de stockage d'électricité à électrolyte non aqueux comprenant :
un électrolyte non aqueux contenant un solvant non aqueux contenant du carbonate cyclique fluoré et un sel d'électrolyte ; et
une électrode négative contenant du graphite et du carbone difficilement graphitisable
une masse du graphite étant plus grande qu'une masse du graphite difficilement graphitisable, et
une teneur du sel d'électrolyte dans l'électrolyte non aqueux étant de moins de 2,0 moles/l,
**caractérisé en ce qu'**une teneur du carbonate cyclique fluoré dans le solvant non aqueux est de 5 % en volume ou plus et de moins de 25 % en volume.

2. Dispositif de stockage d'électricité à électrolyte non aqueux selon la revendication 1, dans lequel un rapport en masse du graphite au carbone difficilement graphitisable (graphite/carbone difficilement graphitisable) est de 70/30 ou plus et de moins de 80/20.

3. Dispositif de stockage d'électricité à électrolyte non aqueux selon la revendication 1 ou 2, dans lequel
l'électrode négative contient le graphite et le carbone difficilement graphitisable comme matériau actif négatif, et
un rapport de teneur totale du graphite et du carbone difficilement graphitisable est de 90 % en masse ou plus sur la base d'une quantité de matériau actif négatif.

4. Dispositif de stockage d'électricité à électrolyte non aqueux selon l'une quelconque des revendications 1 à 3, dans lequel l'électrode négative contient des particules de graphite et des particules de carbone difficilement graphitisables.

5. Dispositif de stockage d'électricité à électrolyte non aqueux selon l'une quelconque des revendications 1 à 4, dans lequel le potentiel d'électrode positive à une tension d'extrémité de charge en usage normal est de 4,40 V (vs. Li/Li+) ou plus.

6. Dispositif de stockage d'électricité à électrolyte non aqueux selon l'une quelconque des revendications 1 à 5, dans lequel la tension d'extrémité de charge en usage normal est de 4,35 V ou plus.
